# EUROPEAN PATENT APPLICATION

(11) **EP 4 593 534 A1**
(43) Date of publication of application: **30.07.2025**
(21) Application number: 24382060.2
(22) Date of filing: 24.01.2024
(51) Int. Cl.: H05H 1/52, H01T 15/00

(54) **SPARK ABLATION DEVICE, METHOD FOR GENERATING NANOPARTICLES BY MEANS OF SAID DEVICE, AND ASSOCIATED USES THEREOF**

(71) Applicant: Fundación IMDEA Materiales, 28906, Getafe (Madrid) (ES)
(72) Inventor: VÁZQUEZ PUFLEAU, Miguel, 28906 Getafe (ES); VILATELA GARCÍA, Juan José, 28691 Villanueva de la Cañada (ES)
(74) Representative: TRBL Intellectual Property

(57) **Abstract**

The present invention relates to a spark ablation device, a method for generating nanoparticles by means of said device, and associated uses thereof. By the combination of a standard RLC circuit with a second one based on the non-idealities of electronic components which are typically neglected in the design of electronic circuitry, the device of the invention can be used for generating large concentrations (10⁸ particles/cm³) of very small conductive nanoparticles (<5 nm geometric mean size). Said components are quite cheap and allow increasing at least 10-fold the sparking frequency of the SDG as compared to the conventional design. Such increase in nanoparticle synthesis rate can be essential for the feasibility of scaling up processes for the synthesis of 1D nanomaterials via the method of floating catalyst chemical vapor deposition.

## Description

The project leading to this application has received funding from the European Union's Horizon 2020 research and innovation programme under the Marie Sklodowska-Curie grant agreement No 101029091.

### FIELD OF THE INVENTION

The present invention lies within the technical field of nanotechnology. More specifically, the invention relates to a spark ablation device, a method for generating nanoparticles by means of said device, and associated uses thereof.

### BACKGROUND OF THE INVENTION

It is still very difficult to synthesize nanoparticles so that their concentration and size distribution does not change over time [Vazquez-Pufleau, M. & Winkler, P.M. Aerosol Sci. Technol., 2020, 54(8), p. 917-928]. Among the different methods for synthesizing nanoparticles, spark discharge is quite promising due to its stability, reliability, and reproducibility. Spark discharge nanoparticle generators (SDGs), also known as spark ablation devices, are based on electrode vaporization by a spark discharge. SDGs typically comprises a power source, an RLC circuit (i.e., a circuit comprising a resistor, an inductor, and a capacitor) and a pair of electrodes [S. Schwyn et al. J. Aerosol Sci., 1988, 19(5), 639-642]. The capacitor is continuously charged by the power source and, when the breakdown voltage is reached, a spark discharge occurs between the electrodes. Components and conditions are chosen such that the energy of the spark discharge is sufficient to cause electrode ablation; i.e., the vaporization of the electrode through the presence of plasma. The spark discharge is repetitive. Nanoparticles are formed from the vaporized material.

Disadvantages of state-of-the-art devices and methods for spark ablation are: (a) their limited nanoparticle production rates due to low spark repetition frequencies (typically in the range of milligrams per hour and with sizes lower than 5 nm up to atomic clusters); (b) emission of large particles formed from dispersions of melted material; and (c) continuous discharge above a certain frequency, stopping particle generation or losing desired particle characteristics. To prevent particles growth, high quenching is necessary, but this is not a very efficient procedure for industrial synthesis [Pfeiffer, T. V., Feng, J., & Schmidt-Ott, A. Adv. Powder Technol., 2014, 25(1), p. 56-70].

One way to achieve a higher throughput is then by increasing the spark repetition frequency. However, this seems to be limited in the standard SDG to external mechanisms that enhance the triggering, such as by automatic switching the SDG voltage. This automatic switching was proposed in US 7012214 B2, using a pulsed arc discharge and a magnetic field for nanopowder synthesis.

Typical RLC circuits used in SDGs operate up to 1 kHz, but patent US 10722287 B2 claims they can increase this number by a factor of 10. This improvement relies on introducing at least one power source that comprises a continuous DC or AC power source and a source for pulsed power. Said power source is configured for repetitively and intermittently varying its power output between a first energy level and a second energy level. The first energy level maintains the discharge substantially continuously between the electrodes of the SDG but is insufficient to cause ablation of the electrodes. The second energy level is higher than the first energy level and sufficient to cause ablation of the electrodes. Although this approach is interesting, it will inevitably increase the cost and complexity of the SDG.

The present invention proposes a solution to the technical problems mentioned above, by means of a novel spark ablation device that allows synthesizing large concentrations of very small conductive nanoparticles without triggering terminals to increase the sparking frequency.

### BRIEF DESCRIPTION OF THE INVENTION

A first object of the present invention relates to a spark ablation device for generating nanoparticles comprising:
- a first electrode;
- a second electrode, separated from the first electrode by a gap;
- a power supply, connected to the first and second electrodes and configured to maintain a discharge between the first and second electrodes;
- a first capacitor, connected in parallel to the power supply; and,
- an outlet for the generated nanoparticles.

Advantageously, the device of the invention further comprises:
- a first inductor, wherein the first inductor and the power supply are connected in series;
- a first resistor, wherein the first resistor and the first inductor are connected in series; and
- an RLC circuit, wherein the first electrode, the first resistor and the RLC circuit are connected in series.

Within the scope of interpretation of the present invention, the term "nanoparticle" will be understood as any particle having a diameter lower than 5 nm.

In a preferred embodiment of the device of the invention, the RLC circuit comprises a second resistor of resistance value R, a second inductor of inductance value L, and a second capacitor of capacitance value C. In the context of the present invention, the expression "second capacitor" is interpreted not only as an electronic component with a specific capacitance value, but also as a cable capacitance value and/or as a parasitic capacitance value due to the second inductor.

More preferably, the second resistor and the second inductor of the RLC circuit are connected in series and the second capacitor is connected in parallel to the second resistor and the second inductor.

In another preferred embodiment of the device of the invention, the first and/or second electrode(s) are connected or connectable to a gas supply unit.

In another preferred embodiment of the device of the invention, the power supply provides a voltage comprised between 1 kV and 20 kV. In particular embodiments, the power supply provides a voltage comprised between 1-15 kV, between 1-10 kV, between 1-5 kV, or between 2-4 kV. In particular embodiments, the power supply provides a voltage of 1, 2, 4, 5, 10, 15, or 20 kV. In a preferred embodiment, the power supply provides a voltage of 2.75 kV.

In another preferred embodiment of the device of the invention, the first resistor and the first inductor are connected in series through a first cable, preferably, with a length comprised between 3 and 15 m. A cable of that length provides enough mobility between the power supply and the electronics in close proximity to it; that is, the first capacitor and the first inductor. As said electronic components are bulky and heavy and the spark normally occurs in a very small section in the SDG, this long cable allows keeping that part of the circuit separate from where the spark occurs. In particular embodiments, the first resistor and the first inductor are connected in series through a first cable with a length comprised between 5-10 m. In particular embodiments, the first resistor and the first inductor are connected in series through a first cable with a length of 3, 5, 10, or 15 m. In a preferred embodiment, the first resistor and the first inductor are connected in series through a first cable with a length of 10 m.

In another preferred embodiment of the invention, the RLC circuit comprises a second cable with a length between 1 cm and 1 m. In particular embodiments, the RLC circuit comprises a second cable with a length between 5-90 cm, between 10-80 cm, between 10-70 cm, between 15-60 cm, between 20-50 cm, between 20-40 cm, or between 25-35 cm. In particular embodiments, the RLC circuit comprises a cable with a length of 1, 5, 10, 15, 20, 25, 35, 40, 50, 60, 70, 80, 90, or 100 cm. In a preferred embodiment, the RLC circuit comprises a cable with a length of 30 cm.

In another preferred embodiment of the invention, the first and second electrodes comprise a conductive material. More preferably, a ceramic material, a semiconductor material, a thermally insulating inorganic material that does not burn, or any combination thereof.

A second object of the invention relates to a nanoparticle printing system comprising a spark ablation device according to any of the preceding claims, and a 2D/3D printer adapted with printing material feeding means, wherein the outlet of the spark ablation device is connected to the printing material feeding means.

A third object of the invention relates to a method for generating nanoparticles by means of a spark ablation device according to any of the embodiments herein described. Advantageously, the method of the invention comprises maintaining a substantially continuous discharge between the first and second electrodes until ablating at least a portion of said electrodes.

In a preferred embodiment of the method of the invention, said method further comprises a step of adjusting the R, L and/or C values of the RLC circuit of the spark ablation device according to any of the embodiments herein described.

In yet another preferred embodiment of the method of the invention, said method further comprises a step of flushing the gap between the first and second electrode with a carrier gas supplied by the gas supply unit.

In yet another preferred embodiment of the method of the invention, said method further comprises a step of automatically adjusting the gap distance between the first and second electrodes as the materials of said electrodes starts to evaporate.

Alternatively, the method of the invention can further comprise a step of manually adjusting the gap distance between the first and second electrodes as the materials of said electrodes starts to evaporate.

A fourth object of the invention relates to the use of a spark ablation device according to any of the embodiments herein described for:
- generating nanoparticles, preferably nanoparticles comprising a conductive material, and more preferably, a semiconductor material, a ceramic material, a thermally insulating inorganic material that does not burn, or any combination thereof;
- biometrical measurements;
- combustion of reciprocating engines, water and gas heaters, boilers, stoves, or any other device that requires the ignition of a fuel-gas mixture; or
- testing electronic components against spark discharge driven failure.

### DESCRIPTION OF THE FIGURES

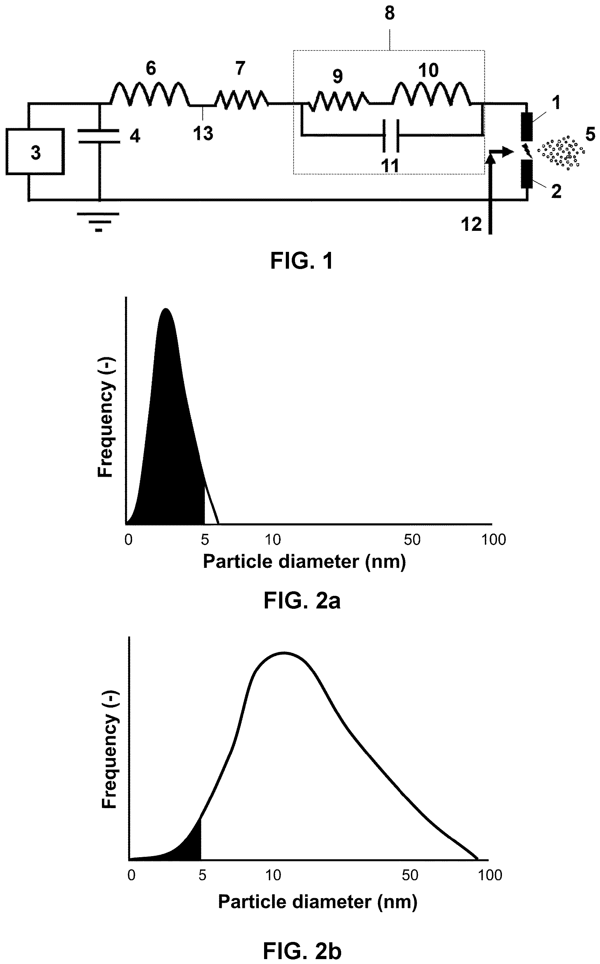

Figure 1 shows the device of the invention according to one of its preferred embodiments. The RLC circuit comprises a second resistor, a second inductor, and a second capacitor. The second resistor and the second inductor are connected in series, and the second capacitor is connected in parallel to the second resistor and the second inductor. In addition, the first and the second electrodes are connected to a gas supply unit.
Figure 2a shows the iron nanoparticle size distribution (part/cm³) obtained for the device of the invention according to one of its preferred embodiments. Figure 2b shows the iron nanoparticle size distribution obtained for a conventional spark discharge generator. Black shaded areas represent the fraction of nanoparticles suitable for catalyzing the synthesis of carbon nanotubes via the method of floating catalyst chemical vapor deposition: 90-95% and 2-5% of total nanoparticles, respectively.

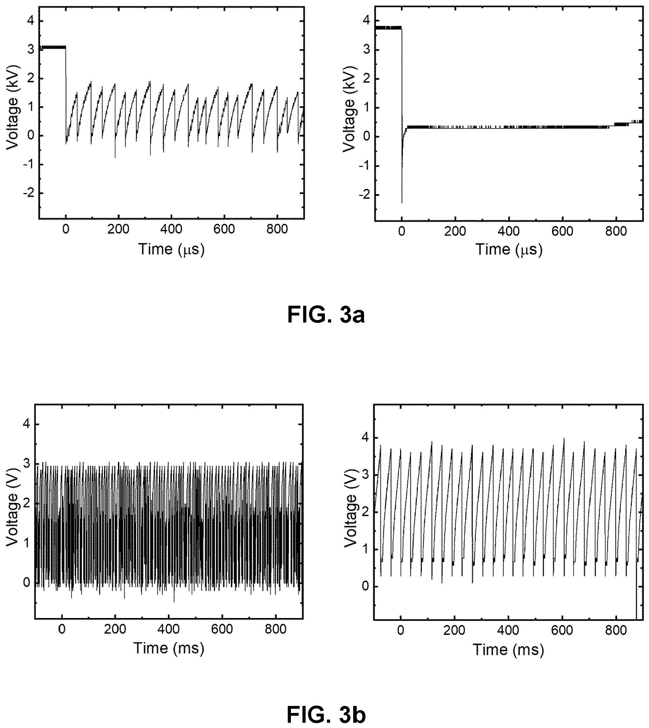

Figure 3 shows the sparking frequency of the spark ablation device of the invention (left) compared with the one of a conventional SDG (right) for the synthesis of iron nanoparticles. In Figure 3a the grid size in the x axis is 100 µs and, in Figure 3b, 100 ms.

### NUMERICAL REFERENCES USED IN THE DRAWINGS

In order to provide a better understanding of the technical features of the invention, the referred Figures 1-3 are accompanied of a series of numerical references which, with an illustrative and non-limiting character, are hereby represented:

| | |
|---|---|
| 1 | First electrode |
| 2 | Second electrode |
| 3 | Power supply |
| 4 | First capacitor |
| 5 | Outlet for generated nanoparticles |
| 6 | First inductor |
| 7 | First resistor |
| 8 | RLC circuit |
| 9 | Second resistor |
| 10 | Second inductor |
| 11 | Second capacitor |
| 12 | Gas supply unit |
| 13 | First cable |

### DETAILED DESCRIPTION OF THE INVENTION

The present invention provides a novel spark ablation device for generating large concentrations (>10⁸ particles/cm³) of very small conductive nanoparticles (<5 nm in geometric mean diameter). To do so, the device shares the following elements with a known SDG:
- a first electrode (1);
- a second electrode (2), separated from the first electrode by a gap;
- a power supply (3), connected to the first (1) and second (2) electrodes and configured to maintain a discharge between the first (1) and second (2) electrodes;
- a first capacitor (4), connected in parallel to the power supply (3); and
- an outlet (5) for the generated nanoparticles.

When a spark discharge occurs between the electrodes (1, 2), it causes the vaporization of their surfaces and, as the vapors cools down again, it nucleates and condenses, synthesizing the nanoparticles.

Advantageously over the prior-art SDGs, the device of the invention further comprises:
- a first inductor (6), wherein the first inductor (6) and the power supply (3) are connected in series;
- a first resistor (7), wherein the first resistor (7) and the first inductor (6) are connected in series through a first cable (13), typically of 3-15 m in length; and
- an RLC circuit (8), wherein the first electrode (1), the first resistor (7) and the RLC circuit (8) are connected in series.

Thanks to this highly inductive configuration with a very small capacitive component, the device of the invention achieves a much higher frequency of oscillation of the current across the electrodes (1, 2) as compared to conventional SDG designs. Also, it is worth emphasizing that using a resistor (7) in series with the power supply (3) for increasing nanoparticle aerosol yield is counterintuitive, since it is a source of energy loss that would, in principle, decrease productivity.

Until now, the only known usage of a resistor in an SDG was for tuning the compositional percentage of the aerosols formed using positive and negative electrodes of different materials in an Al-Mg system [see Pfeiffer, T. V., Feng, J., & Schmidt-Ott, A. Adv. Powder Technol., 2014, 25(1), p. 56-70]. However, in the device of the invention, the first resistor (7) works as a faucet, limiting and regulating the total amount of current that can pass through the electrodes (1,2), making the process more efficient. In such a way, a smaller amount of electrode mass on each spark is evaporated, allowing for smaller particles that do not agglomerate as quickly as they can cool down in between sparks. On the other hand, such amount of energy does not deplete the energy available in the circuit and the sparks can occur at a faster rate, translating into an at least 10-fold higher sparking frequency as compared to the conventional designs. In such a way, an effective increase in the number concentration is achieved and small particles are selectively synthesized.

Furthermore, not having capacitors and capacitive components at the end of the circuit allows to improve the behavior of the SDG towards the goals mentioned. Capacitors store energy and a spark can fully discharge them in a fraction of a microsecond. This unavoidably translates into a relatively powerful stream of electrons bombarding the electrodes and causing a violent evaporation of a section of the surface of the electrode where the spark hits, causing local heating of up to 30000 K. This vaporizes immediately electrode material, which then nucleates and grows as nanoparticles. The more mass evaporates, the larger the nanoparticles will grow based on aerosol dynamics. This phenomenon limits the formation of stable aerosols of small nanoparticles at high concentrations under standard synthesis conditions. The other detrimental effect of the capacitor is that after its discharge, it unavoidably needs time to recharge again. This charge and discharge process translates into an upper limit in the maximum sparking frequency of up to around 1 kHz from conventional SDGs.

The first (1) and/or second (2) electrode(s) preferably comprise(s) a conductive material and, more preferably, a ceramic material, a semiconductor material, a thermally insulating inorganic material that does not burn, or any possible combination thereof.

The power supply (3) provides a voltage preferably comprised between 1 kV and 20 kV.

The RLC circuit (8) preferably comprises a second resistor (9) of resistance value R, a second inductor (10) of inductance value L, and a second capacitor (11) of capacitance value C. More preferably, the second resistor (9) and the second inductor (10) are connected in series and the second capacitor (11) is connected in parallel to the second resistor (9) and the second inductor (10). Typically, the RLC circuit (8) comprises a second cable with a length between 1 cm and 1m. The second resistor (9) allows to achieve a fast recharge after the transition regime of high sparking has finished, meaning a much faster restarting of the spark than if this component was not present. Another contribution of the second resistor (9) is allowing to explore real values of RLC components that are under conventional conditions not available in practice when using an SDG in the classical configurations. This is because regular electronic components on their own have a larger contribution to inductance, capacitance and/or resistance than the intrinsic values necessary to achieve the high frequency oscillation and optimized conditions for aerosol generation of the present invention. The reason is that very few industries focus their attention on high frequency and high voltage applications. Therefore, commercial electronic components, even wires, whose parasitic or intrinsic RLC parameters that are negligible under low voltage and low frequency applications become huge and, typically, even their characterization remains challenging and expensive.

A preferred embodiment of the device of the invention is schematically represented in Figure 1, wherein the first (1) and the second (2) electrodes are connected to a gas supply unit (12).

A second object of the present invention relates to a nanoparticle printing system comprising a spark ablation device according to any of the embodiments herein described, and a 2D/3D printer adapted with printing material feeding means, wherein the outlet (5) of the spark ablation device is connected to the printing material feeding means.

A third object of the present invention relates to a method for generating nanoparticles by means of the spark ablation device according to any of the embodiments herein described, wherein said method comprises maintaining a substantially continuous discharge between the first (1) and second (2) electrodes until ablating at least a portion of said electrodes (1, 2).

In preferred embodiment of the method of the invention, said method further comprises a step of adjusting the R, L and/or C values of the RLC circuit (8) of the spark ablation device. The tuning of these non-ideal RLC parameters allows to achieve up to 20 kHz of sparking frequency repetition.

In a preferred embodiment of the method of the invention, said method further comprises a step of flushing the gap between the first (1) and second (2) electrodes with a carrier gas supplied by the gas supply unit (12). In this way, a stable gas stream of nanoparticles is produced, and the growth of previously synthesized aerosols is prevented.

In another preferred embodiment of the method of the invention, said method further comprises a step of adjusting, either automatically or manually, the gap distance between the first (1) and second (2) electrodes as the materials of said electrodes (1, 2) starts to evaporate. Due to Pashen's law, the breakdown voltage is proportional to the gap of gas in between the electrodes subjected to high voltage difference. Furthermore, such control allows maintaining a greater stability in the synthesis of nanoparticles, as a fraction of a millimeter can increase in the order of kilovolts the required voltage to start a spark. With automatic adjustment, the SDG can be run virtually uninterruptedly.

Interestingly, the increase in nanoparticle synthesis rate achieved by the device of the invention can be essential for the feasibility of scaling up processes for the synthesis of 1D nanomaterials, preferably nanowires and nanotubes, via the method of floating catalyst chemical vapor deposition (FCCVD). This method relies on aerosols of a metallic catalyst and is limited in yield due to both the size distribution and concentration of the aerosols available. In particular, the synthesis of carbon nanotubes (CNTs) could be greatly enhanced because, in addition to the above two limitations on yield, there seems to be an upper limit to the maximum size of usable aerosols, and even if a large amount of them is available, only the fraction around 5 nm or smaller is catalytically active.

Therefore, a fourth object of the present invention relates to the use of a spark ablation device according to any of the embodiments herein described for the synthesis of nanoparticles; preferably, nanoparticles comprising a conductive material, and more preferably, a semiconductor material, a ceramic material, a thermally insulating inorganic material that does not burn, or any combination thereof. Additionally, it can also be used for biometrical measurements -such as tonometry, where the extended sparking frequency at low cost might enhance the measurement range-, for high-speed sparking applications, such as combustion of reciprocating engines, water and gas heaters, boilers, stoves, or any other device that requires the ignition of fuel-gas mixtures, as well as for testing electronic components against spark discharge driven failure (transformers, switches, relays, capacitors, etc.), by enabling a reproducible sparking source at a frequency of up to 20 kHz.

### Example of realization

The spark ablation device of the invention was tested to synthesize iron nanoparticles, important catalyst for the synthesis of carbon nanotubes (CNTs) via floating catalyst chemical vapor deposition (FCCVD) method. The electrodes (1, 2) used were made of iron 97.5 % purity, separated by a gap of 1 mm. The current fed through the power supply (3) was of 1 mA at a nominal voltage of 2.75 kV. Regarding the electrical components, the capacitance of the first capacitor (4), connected in parallel to the power supply (3), is 2 nF. The inductance of the first inductor (6) is 1 µH. The resistance of the first resistor (7) is 1 MOhm, connected in series to the first inductor (6) through a first cable (13) of 10 m in length. The RLC circuit (8) consist of a resistor (9) of 1 mOhm, an inductor (10) after the resistance of 5.93 mH and a cable of 30 cm to the electrode. Capacitance after the resistance is only attributed to the intrinsic cable and inductor parasitic capacitance, both in the order of around 50 pF. Under this embodiment, said intrinsic and parasitic capacitance effectively acts as the second capacitor (11).

An operating condition that produced high concentration (~1.2·10⁸ part/cm³) of very small particles (~3 nm mean size) was obtained with the device of the invention (see Fig. 2a). However, iron nanoparticles produced by a state-of-the-art spark discharge generator tend to have 1-2 orders of magnitude lower concentrations (~5·10⁷ part/cm³) of nanoparticles with an average size of 10 nm (see Fig. 2b).

Comparing the black shaded areas highlighted in the nanoparticle size distributions shown in Figures 2a and 2b, a much larger fraction useful for the synthesis of carbon nanotubes (i.e., nanoparticles with a size between 1 and 5 nm) was obtained with the device of the invention (90-95% vs. 2-5% of total nanoparticles). For the standard spark discharge generator (Fig. 2b), most of the nanoparticles not only are unable to catalyze the synthesis of carbon nanotubes, but also remain as impurities and scavenge precursors, decreasing the quality of the spinnable CNT yarn.

In Figure 3 the sparking frequency of the spark ablation device of the invention (left) is compared with the one of a conventional SDG (right). Based on such graphs, the device of the invention had a spark every 50 µs, whereas the standard SDG had one every 20 ms and up to around 1 ms. This means that the spark repetition rates achieved by the device of the invention were of up to 20 kHz. In addition, note that the presence of a capacitor at the end of the circuit in the conventional SDG configuration causes a delay in time due to its need to be recharged (compare the sharp slope in voltage signal in Fig. 3b (right) with the vertical and instantaneous voltage drop in Fig, 3b (left)).

Therefore, the development of the spark ablation device of the invention capable of producing a high concentration of catalyst particles in the desired size range in a controlled manner can be a key development for scaling up CNTs synthesis methodologies [see, for example, Weller, L., et al. Carbon, 2019, 146, p. 789-812, or Lee, S-H., et al. Carbon, 2021, 173, p. 901-909] and reactors. This approach is also promising for other nanomaterials synthesis via FCCVD [Sivakumar, S., et al. Nanotechnology, 2020, 32(2), p. 025605; Schäufele, R.S., et al. Nanoscale, 2022, 14(1), p. 55-64; Barrigón, E., et al. Nano Lett., 2017. 18(2), p. 1088-1092; Gómez-Palos, I., et al. Nanoscale, 2022, 14(48), p. 18175-18183; Gómez-Palos, I., et al. Nanoscale, 2023, 15(13), p. 6052-6074]. This could pave the way for their introduction in new commercial products like, for example, functionalized surfaces, solar cells, coatings of electronic components, or size standards particles for instrumentation.

## Claims

1. A spark ablation device for generating nanoparticles comprising:
- a first electrode (1);
- a second electrode (2), separated from the first electrode by a gap;
- a power supply (3), connected to the first (1) and second (2) electrodes and configured to maintain a discharge between the first (1) and second (2) electrodes;
- a first capacitor (4), connected in parallel to the power supply (3);
- an outlet (5) for the generated nanoparticles;
being **characterized in that** said device further comprises:
- a first inductor (6), wherein the first inductor (6) and the power supply (3) are connected in series;
- a first resistor (7), wherein the first resistor (7) and the first inductor (6) are connected in series; and
- an RLC circuit (8), wherein the first electrode (1), the first resistor (7) and the RLC circuit (8) are connected in series.

2. A spark ablation device according to the preceding claim, wherein the RLC circuit (8) comprises a second resistor (9) of resistance value R, a second inductor (10) of inductance value L, and a second capacitor (11) of capacitance value C.

3. A spark ablation device according to the preceding claim, wherein the second resistor (9) and the second inductor (10) are connected in series and wherein the second capacitor (11) is connected in parallel to the second resistor (9) and the second inductor (10).

4. A spark ablation device according to any of the preceding claims, wherein the first (1) and/or second (2) electrode(s) are connected or connectable to a gas supply unit (12).

5. A spark ablation device according to any of the preceding claims, wherein the power supply (3) provides a voltage comprised between 1 kV and 20 kV.

6. A spark ablation device according to any of the preceding claims, wherein the first resistor (7) and the first inductor (6) are connected in series through a first cable (13).

7. A spark ablation device according to any of the preceding claims, wherein the first (1) and second (2) electrodes comprise a conductive material.

8. A spark ablation device according to the preceding claim, wherein the first (1) and/or second (2) electrode(s) comprise(s) a ceramic material, a semiconductor material, a thermally insulating inorganic material that does not burn, or any combination thereof.

9. A nanoparticle printing system comprising a spark ablation device according to any of the preceding claims, and a 2D/3D printer adapted with printing material feeding means, wherein the outlet (5) of the spark ablation device is connected to the printing material feeding means.

10. Method for generating nanoparticles by means of the spark ablation device according to any of claims 1-8, wherein said method comprises maintaining a substantially continuous discharge between the first (1) and second (2) electrodes until ablating at least a portion of said electrodes (1, 2).

11. Method according to the preceding claim, further comprising a step of adjusting the R, L and/or C values of the RLC circuit (8) of the spark ablation device.

12. Method according to any of claims 10-11, further comprising a step of flushing the gap between the first (1) and second electrode (2) with a carrier gas supplied by the gas supply unit (12).

13. Method according to any of claims 10-12, further comprising a step of automatically adjusting the gap distance between the first (1) and second (2) electrodes as the materials of said electrodes (1, 2) starts to evaporate.

14. Method according to any of claims 10-12, further comprising a step of manually adjusting the gap distance between the first (1) and second (2) electrodes as the materials of said electrodes (1,2) starts to evaporate.

15. Use of the spark ablation device according to any of claims 1-8 for:
- synthesizing nanoparticles; or
- biometrical measurements; or
- combustion of reciprocating engines, water and gas heaters, boilers, stoves, or any other device that requires the ignition of a fuel-gas mixture; or
- testing electronic components against spark discharge driven failure.
